# EUROPÄISCHE PATENTSCHRIFT

(11) **EP 1 012 677 B1**
(45) Veröffentlichungstag und Bekanntmachung des Hinweises auf die Patenterteilung: **06.04.2005**
(21) Anmeldenummer: 98950044.2
(22) Anmeldetag: 17.09.1998
(51) Int. Cl.: G04G 5/00

(54) **VERFAHREN UND VORRICHTUNG ZUM AUSSENDEN EINES ZEITSIGNALS**
METHOD AND DEVICE FOR EMITTING A TIME SIGNAL
PROCEDE ET DISPOSITIF POUR EMETTRE UN SIGNAL HORAIRE

(30) Priorität: 24.09.1997 DE 19742100
(43) Veröffentlichungstag der Anmeldung: 28.06.2000
(73) Patentinhaber: Steinbeis Transferzentrum Raumfahrtsysteme, 71126 Gäufelden (DE)
(72) Erfinder: HUBER, Felix, D-70839 Gerlingen (DE); MESSERSCHMID, Ernst, D-72766 Reutlingen (DE); SCHÄFER, Wolfgang, D-71254 Ditzingen (DE)
(74) Vertreter: Gleiss, Alf-Olav, Dr.jur. Dipl.-Ing.
(86) Internationale Anmeldenummer: PCT/EP1998/005913
(87) Internationale Veröffentlichungsnummer: WO 1999/015940

(56) Entgegenhaltungen:
- EP-A- 0 444 738
- WO-A-95/27927
- DE-A- 4 313 945
- US-A- 5 408 444
- US-A- 5 574 660

## Beschreibung

Die Erfindung betrifft ein Verfahren zum Aussenden eines Zeitsignals gemäß Oberbegriff des Anspruchs 1 sowie ein Verfahren zum Empfangen eines Zeitsignals gemäß Oberbegriff des Anspruchs 21.

Ein terrestrischer Zeitsignal-Sender, wie zum Beispiel der DCF-77 Sender der physikalisch-technischen Bundesanstalt (PTB) bei Frankfurt am Main, sendet sein Zeitsignal im Frequenzbereich der Langwelle aus, um damit eine große Reichweite zu ermöglichen. Trotz der großen Sendeleistung ergibt sich jedoch nur eine Reichweite von 1200 bis 2000 Kilometer. Dieses Zeitsignal ist außerdem nur für eine nationale Zeit ausgelegt und benutzt weiterhin eine spezielle Sendefrequenz und eine eigene Kodierung, so daß bei einem Aufenthalt im Ausland der Empfänger für mehrere verschiedene Zeitsignale geeignet sein muß oder aber nichts Auswertbares mehr empfängt. Bei einem Aufenthalt auf See weit entfernt von den Küsten ist ein Empfang überhaupt nicht mehr möglich. Eine Bestimmung der Zeit mit Hilfe von Satelliten-Positions-Systemen (GPS) ist zwar möglich, jedoch fehlen hier die Zusatzinformationen wie Sommerzeit, Schaltsekunde und so weiter, so daß eine umständliche semimanuelle Einstellung nötig wird, um die aktuelle lokale Zeit zu erhalten.

Es sind auch sogenannte Mehrfachfunkuhren bekannt, die es ermöglichen in verschiedenen Ländern Zeitsignale zu empfangen beziehungsweise auszuwerten. Jedoch ist es hierbei notwendig, daß vom Anwender die Uhr so eingestellt wird, daß der Uhr der Ort an dem sie sich befindet bekannt ist. Diese Mehrfachfunkuhren sind jedoch nicht in allen Ländern funktionsfähig.

Aus der US-A-5 408 444 ist ein Verfahren zum Bestimmen einer Position eines Empfängers bekannt. Um an diesem Empfänger die richtige Zeit einstellen zu können, muß seine Position anhand von mindestens drei Satelliten des GPS-Satellitensystems ermittelt werden. Ist die Position bestimmt, erfolgt die Zeiteinstellung anhand eines für diese Position vorgegebenen Korrekturwertes, der in einer Datenbank des Empfängers abgelegt ist.

Aus der US-A-5 574 660 ist es ebenfalls bekannt, einen auf der Erde befindlichen Empfänger mittels GPS-System zu orten. Darüber hinaus ist vorgesehen, bei dem auf der Erde befindlichen Empfänger die Antenne der jeweiligen Flugbahn nachzuführen.

Aus der DE 43 13 945 A1 sind ebenfalls mehrere Satelliten zu einem Satellitensystem zusammengeschlossen. Für die Positionsbestimmung des Empfängers, der das Zeitsignal empfangen soll, wird lediglich der Dopplerverlauf über der Zeit verwendet. Derartige Positionsbestimmungen sind jedoch sehr ungenau.

Aufgabe der Erfindung ist es daher, jeweils ein Verfahren zum Aussenden und Empfangen eines Zeitsignals anzugeben, bei dem lediglich ein Sender für die Positionsbestimmung des Empfängers bereitgestellt werden muß, um die aktuelle lokale Zeit einstellen zu können.

Diese Aufgabe wird mit einem Verfahren mit den Merkmalen des Anspruchs 1 gelöst.

Das erfindungsgemäße Verfahren nach Anspruch 1 sieht vor, daß zur Erzielung eines globalen Empfangs des Zeitsignals die Aussendung von einem sich relativ zu einem Punkt der Erdoberfläche bewegenden Flugkörper erfolgt. Das Zeitsignal wird erfindungsgemäß mit einer bestimmten oder mehreren Frequenzen von dem Flugkörper ausgesandt, der sich entlang einer Flugbahn mit großer Bahnneigung bewegt. Ferner ist vorgesehen, daß das Signal in Form einer Keule auf einer vorgebbaren Bahn am Sender umläuft und die umlaufende Sendekeule Winkelinformationen umfaßt, die zur Bestimmung der Richtung des Senders dienen. Wird das Zeitsignal mit einer Frequenz ausgesendet, kann mit Hilfe des Dopplerverlaufs die Entfernung zwischen Sender und Empfänger ermittelt werden. Werden mehrere Frequenzen verwendet, kann die Entfernung zwischen Sender und Empfänger durch die Laufzeitdispersion bestimmt werden. Außerdem wird die Position des Empfängers dadurch bestimmt, daß aus der umlaufenden Keule die Winkelinformationen vom Empfänger erfaßt werden, um feststellen zu können, ob sich der Empfänger links oder rechts einer Bodenspur des Flugkörpers befindet. Somit wird eine genaue Ortsbestimmung des Empfängers möglich, so daß die tatsächlich richtige aktuelle lokale Ortszeit am Empfänger eingestellt werden kann. Für die Positionsbestimmung des Empfängers wird also das abzustrahlende Signal nicht gleichmäßig nach unten abgestrahlt, sondern läuft mittels einer rotierenden Keule um. Diese Rotation kann entweder durch mechanisch bewegte Antennen oder durch geeignete elektronische Mittel erzeugt werden. Die umlaufende Keule wird in Abhängigkeit von der abgestrahlten Winkelposition in geeigneter Weise verändert, so daß aus dem empfangenen Signal der momentane Abstrahlwinkel bestimmt werden kann. Dies kann zum Beispiel durch eine Hilfsfrequenz erfolgen, so daß jede Winkelposition beziehungsweise jeder Winkelpositionsbereich zwischen 0° und 360° eine definierte Hilfsfrequenz aufweist. Ein Winkel von 90° bis 270° zum Zeitpunkt der größten Annäherung definiert dann die Seite des Vorbeiflugs.

Ein Empfänger ermittelt aus den empfangenen Signalen des Zeitsignal-Senders selbständig seine eigene geographische Position auf der Erde und bestimmt hieraus die aktuelle lokale Zeit, ohne daß dazu ein Benutzereingriff erforderlich ist. Ein normaler Satellit kommt für solch ein Zeitsignal nicht in Betracht, da entweder die Flughöhe wegen der erforderlichen Lebensdauer zu hoch ist und damit die erforderlichen Empfangsfeldstärken nicht erreicht werden oder die Inklination der Bahn zu gering ist, so daß nicht die gesamte Oberfläche der Erde ausgestrahlt werden kann. Mit einem niedrig (in einer Höhe von beispielsweise 200 km bis 400 km) fliegenden Satelliten oder Raumstation mit großer Bahnneigung ist es jedoch möglich die Erdoberfläche im Bereich von ± 70 bis 80 Breitengraden abzudecken. Mit einer großen Bahnneigung ist im Laufe der Zeit durch den Satelliten beziehungsweise durch die Raumstation die gesamte Erdoberfläche überflogen.

Durch eine spezielle Antennengeometrie der erfindungsgemäßen Vorrichtung läßt sich der Überstreichungsbereich der Erdoberfläche so weit dehnen, daß nur die Polarregionen nicht versorgt werden können.

Terrestrische Funkuhren synchronisieren sich normalerweise nur einmal am Tag, um die Batterie zu schonen. Dies geschieht normalerweise nachts, da auch die Umschaltung zwischen Sommer- und Winterzeit in dieser Zeit erfolgt. Bei einer weltraumgestützten Funkuhr ist dies nicht so ohne weiteres möglich, da der Sender sich zum vorgegebenen Zeitpunkt im Empfangsbereich aufhalten muß. Daher überträgt der erfindungsgemäße Zeitsignal-Sender zusätzlich zu den eigentlichen Zeitinformationen noch Zusatzdaten über die nächsten Überflugzeiten für ein bestimmtes Gebiet, so daß der Empfänger schon im voraus die Kontaktzeiten des Empfangs kennt. Beim ersten Einschalten der Uhr oder bei einem Verlust der Kontaktzeiten schaltet sich der Empfänger immer nur kurz ein, um festzustellen, ob das Zeitsignal zu empfangen ist. Anschließend wird eine Ruhepause eingelegt, die kürzer als ein Empfangszeitfenster ist, so daß ein möglicher Kontakt nicht verpaßt werden kann. Sobald der erste Empfangskontakt hergestellt wurde, geht die Uhr zum normalen Einschaltzyklus über.

Der Empfangsbereich für einen bestimmten Bodenpunkt des Senders kann sich über mehrere Zeitzonen erstrecken. Daher muß der Empfänger feststellen, wie weit der momentane Bodenpunkt, für den die gesendeten Daten berechnet wurden, von der eigenen geographischen Position entfernt ist. Hierzu sind zwei Möglichkeiten vorgesehen:
1. Bei einem Überflug des Satelliten oder der Raumstation relativ nahe zum Empfänger ist die durch die hohe Geschwindigkeit des Senders verursachte Dopplerverschiebung der empfangenen Frequenz so stark, daß aus dem Frequenzsprung und der Form des Sprunges der Zeitpunkt des Überfluges und damit der Abstand bestimmt werden können.
2. Bei einem relativ weit entfernten Vorbeiflug des Senders wird die Laufzeitdispersion, also die Abhängigkeit der Fortpflanzungsgeschwindigkeit einer Wellenbewegung von der Wellenlänge beziehungsweise Frequenz, verschiedener Frequenzen beim Durchgang durch die Ionosphäre der Erde ausgewertet. Die elektrisch leitenden, oberen Luftschichten der Atmosphäre (Ionosphäre) behindern die Ausbreitung von Radiowellen je nach Frequenz des ausgesandten Signals unterschiedlich stark. Dies bewirkt, daß gleichzeitig abgestrahlte Signale verschiedener Frequenz zu unterschiedlichen Zeiten am Empfänger ankommen. wenn die elektrische Leitfähigkeit der Ionosphäre bekannt ist, kann aus diesem Zeitversatz die Entfernung des Senders vom Empfänger bestimmt werden. Die aktuellen Kenndaten für die Ionosphäre können von einer Bodenstation bestimmt werden oder der Zeitsignal-Sender vermißt ständig selbst die Ionosphäre, indem das Echo eines Testsignals ausgewertet wird.

In einer weiteren vorteilhaften Ausgestaltung der Erfindung wird die Erdoberfläche zur Speicher- und Rechenersparnis innerhalb des Empfängers in numerierte Zonen unterteilt. Der Sender übermittelt dann zusätzlich zum Zeitsignal eine Nummer der aktuellen Zone und die vorher erwähnten Zusatzinformationen. Diese Daten werden im Empfänger gespeichert. Der Sender kann somit auch schon Bahnkorrekturen und Zeitumschaltungen mit vorausberechnen und dies dem Empfänger mitteilen. Durch die Einteilung der Erde in geeignete Zonen, die mit den internationalen Zeitzonen nicht identisch sein müssen, ist somit der Empfänger in der Lage durch einfache Offset-Addition beziehungsweise Subtraktion zur übertragenen Zeitinformation des Zeitsignal-Senders die aktuelle Zeit in dem sich der Empfänger befindet zu errechnen.

Der Sender übermittelt kontinuierlich wiederholend die aktuelle Zeit und die Zusatzinformationen. Damit der Empfänger nicht die volle Zeit für ein bereits begonnenes Datenpaket abwarten muß, bevor mit dem Empfang eines vollständigen Paketes begonnen werden kann, sind in den Datenstrom leicht zu erkennende Synchronisationssignale eingebettet, so daß mit der Auswertung auch mitten in einem Paket begonnen werden kann. Dies minimiert die Zeit, für die der Empfänger aktiviert werden muß und verringert dadurch den Stromverbrauch der Uhr.

Nach internationalen Vorschriften dürfen Sender auf Satelliten oder Raumstationen eine gewisse Sendeleistung (Power Flux Density) nicht überschreiten, damit andere Systeme nicht gestört werden. Um diese Randbedingung zu erfüllen, wird bei dem erfindungsgemäßen Verfahren die sogenannte Spread Spectrum Technik angewandt, und zwar so, daß eine getrennte Kodierung und Modulation erfolgen kann. Das Sendesignal wird anschließend mit einer bestimmten Frequenz und einem bestimmten Frequenzhub periodisch in der Sendefrequenz verschoben (Sweeping). Dieses Sweeping und alle anderen Veränderungen des Sendesignals erfolgen synchron und phasenstarr gekoppelt zu den Zeitnormalen an Bord des Zeitsignal-Senders, so daß aus der momentanen Sweepfrequenz und der Sweepphasenlage die empfangene Zeit mit einer Auflösung bis in den Microsekundenbereich bestimmt werden kann.

Zur Einstellung der Zeit an Bord des Zeitsignal-Senders werden zum einen Steuersignale von einer Boden- oder Kontrollstation verwendet, zum anderen kann der Zeitsignal-Sender selbst die Zeitsignale von nationalen Zeitsendern beim Überflug dekodieren um sich damit selbst zu synchronisieren.

Die Erfindung wird nun anhand eines Ausführungsbeispiels mit Bezug auf die Zeichnungen näher beschrieben. Dabei zeigen:
- Figur 1: eine schematische Abbildung eines weltraumgestützten globalen Zeitsignal-Systems, und
- Figur 2: eine schematische Darstellung der Erde, und
- Figur 3: einen typischen Empfangsbereich auf der Erde, und
- Figur 4: einen Graphen einer Dopplerverschiebung.

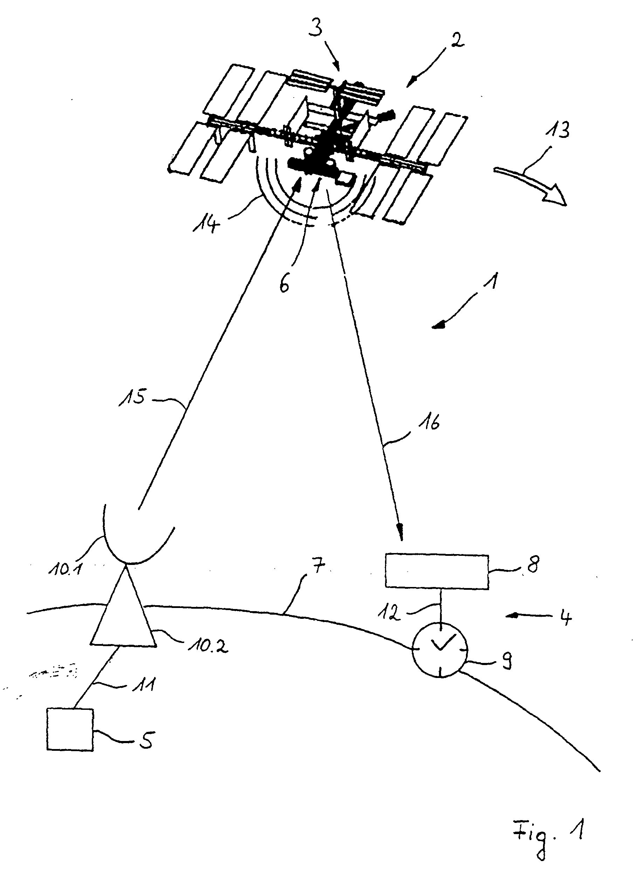

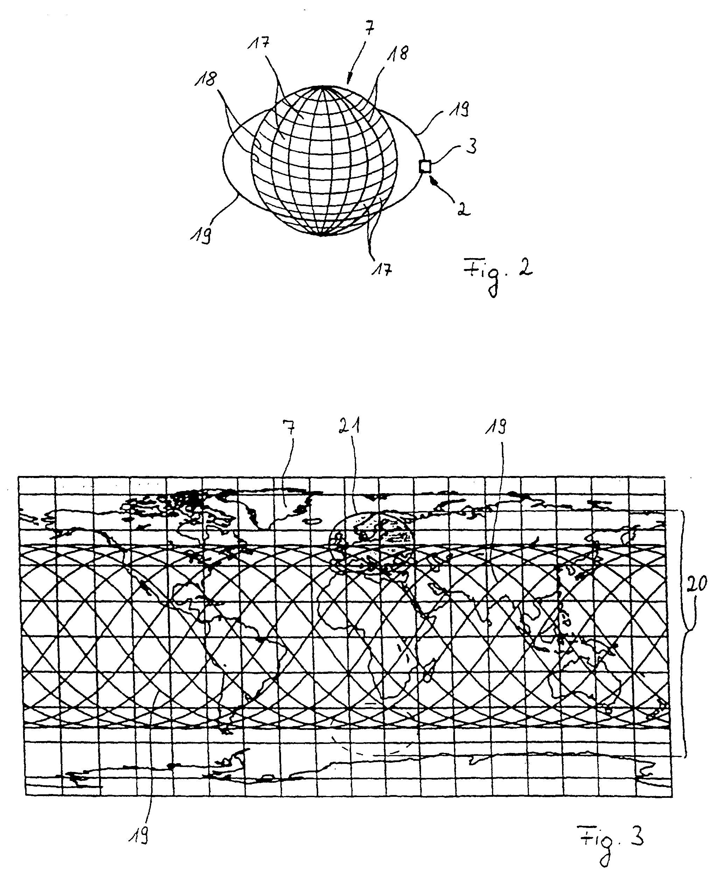

Figur 1 zeigt ein weltraumgestütztes globales Zeitsignal-System 1, das zur Verteilung eines nahezu global zu empfangenden Zeitsignals 14 verwendet wird, um damit eine automatische Einstellung von Uhren auf die jeweilige lokale Zeit, in der sich die Uhr befindet, zu bewirken. Das Zeitsignal-Systern. 1 weist einen Flugkörper 2 in Form eines Satelliten 3, eine Empfangseinheit 4 einen Zeitsignal-Generator 5 und eine Bodenstation 10.2 mitsamt Antenne 10.1 auf.

Der Satellit 3 weist einen Zeitsignal-Sender 6 auf, der zur Verteilung beziehungsweise zum Versenden des Zeitsignals 14 sowie weiterer Zusatzinformationen dient. Das Zeitsignal 14 ist in der Darstellung in Figur 1 symbolisch durch halbkreisförmige Wellenzüge angedeutet und läßt damit keinen Rückschluß auf die tatsächliche Ausbreitungsrichtung des Zeitsignals 14 sowie der Zusatzinformationen zu. Die zur Funktion des Satelliten 3 notwendigen Einrichtungen, wie zum Beispiel Energieversorgung oder Flugsteuerung sind der Übersichtlichkeit halber nicht mit Bezugszeichen versehen.

Die Empfangseinheit 4, die sich auf der Erde 7 befindet, weist einen Zeitsignal-Empfänger 8 und eine Uhr 9 auf. Die Uhr 9, die vorzugsweise auch als Armbanduhr ausgebildet sein kann, und der Zeitsignal-Empfänger 8 sind über eine Verbindungsleitung 12 miteinander verbunden, so daß eine Synchronisationsinformation von dem Zeitsignal-Empfänger 8 zur Uhr 9 übertragen werden kann.

Der Zeitsignal-Generator 5 dient zur Erzeugung einer Zeitbasis zum Beispiel mittels einer Atomuhr.
Über eine Übertragungsleitung 11 ist der Zeitsignal-Generator 5 mit der auch als Kontrollstation bezeichneten Bodenstation 10.2 verbunden. Die Bodenstation 10.2 mitsamt ihrer Antenne 10.1 dient zur Übertragung eines Signals, das durch einen Pfeil 15 in Figur 1 angedeutet ist und der Synchronisation der Bordzeit des Satelliten 3 dient.

Die Flugbahn des Satelliten 3 ist in Figur 1 durch einen Pfeil 13 angedeutet. Ein weiterer Pfeil 16 kennzeichnet eine Signalfluß-Richtung des Zeitsignals 14 vom Zeitsignal-Sender 6 zum Zeitsignal-Empfänger 8.

Figur 2 zeigt in schematischer Darstellung die Erde 7, die in mehrere Segmente beziehungsweise Zonen 17 aufgeteilt ist. Zwei benachbarte Zonen 17 werden. durch eine Zonengrenze 18 voneinander getrennt, die parallel zu den Längengraden beziehungsweise Breitengraden der Erde 7 verlaufen, so daß die Zonen 17 quasi quadratisch oder rechteckförmig ausgebildet sind. Die Zonen 17 sind möglichst so zu wählen, daß sie mit den auf der Erde 7 bestehenden Zeitzonen in etwa übereinstimmen; dies ist jedoch nur annäherungsweise möglich, da es wenige geradlinige Zeitzonengrenzen auf der Erde 7 gibt. In Figur 2 sind die Zonen 17 nur schematisch eingezeichnet und lassen damit keinen Rückschluß auf deren tatsächliche Größe zu; in der Praxis ist die Größe der Zone 17 so zu bemessen, daß sie kleiner als der Empfangsbereich ist. Der Satellit 3 mitsamt seiner Flugbahn 19 ist in Figur 2 nur schematisch -der Vollständigkeit halber- eingezeichnet. Der korrekte Flugverlauf beziehungsweise die korrekte Flugbahn 19 ist der Figur 3, die nachstehend näher beschrieben wird, zu entnehmen.

Figur 3 zeigt in einer Abwicklung der Erde 7 den Empfangsbereich 20 des Satelliten 3 auf der Erde 7. Durch eine hohe Inklination beziehungsweise eine große Bahnneigung des Satelliten 3 ergibt sich eine Flugbahn 19, die von sinusähnlicher Gestalt ist. Durch mehrfaches Umrunden des Satelliten 3 um die Erde 7 ergibt sich damit ein flächendeckender beziehungsweise nahezu globaler Empfangsbereich 20. In der Figur 3 ist der Empfangsbereich 20 des Satelliten 3 so eingezeichnet, daß ein auf die Erde 7 projizierter Empfangskegel 21 momentan sich über Europa befindet. In Figur 3 ist gut zu erkennen, daß der auf die Erde 7 projizierte Empfangskegel 21, der durch die Abwicklung der Erde 7 elliptisch in der Abbildung ausgebildet ist, ganz Europa erfaßt und somit mehrere real bestehende Zeitzonen überstreicht.

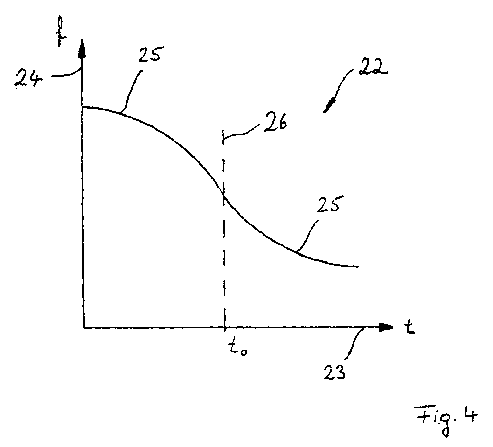

Figur 4 zeigt einen Graphen 22 mit einem beispielhaften Frequenzverlauf 25 einer Dopplerverschiebung, wie er aus der Sicht des Zeitsignal-Empfängers 8 zu empfangen ist. In dem Graphen 22 der Figur 4 ist auf der Abszisse 23 die Zeit und auf der Ordinate 24 die Frequenz aufgetragen. Eine gestrichelte senkrechte Linie 26 kennzeichnet einen Überflugzeitpunkt t₀, an dem der Zeitsignal-Empfänger 8 den geringsten Abstand zu dem Zeitsignal-Sender 6 aufweist. Der Bereich links der gestrichelten Linie 26 kennzeichnet die Annäherung des Zeitsignal-Senders 6 an den Zeitsignal-Empfänger 8 und entsprechend der Bereich rechts von der Linie 26 den Bereich, in dem sich der Zeitsignal-Sender 6 von dem Zeitsignal-Empfänger 8 entfernt. Je größer die Geschwindigkeitskomponente des Zeitsignal-Senders 6 in Richtung des Zeitsignal-Empfängers 8 ist, das heißt je näher der Satellit 3 an dem Zeitsignal-Empfänger 8 vorbeifliegt, um so ausgeprägter, das heißt um so größer ist der Frequenzsprung im Bereich der Überflugzeit t₀. Aus dem Frequenzverlauf 25 kann somit der Zeitsignal-Empfänger 8 den Abstand zum Zeitsignal-Sender 6 ermitteln.

## Patentansprüche

1. Verfahren zum Aussenden eines Zeitsignals, wobei
- zur Erzielung eines globalen Empfangs des Zeitsignals die Aussendung mit einer bestimmten oder mehreren Frequenzen von einem sich relativ zu einem Punkt der Erdoberfläche bewegenden Flugkörper (2) erfolgt, der sich entlang einer Flugbahn (19) mit großer Bahnneigung bewegt,
- das Zeitsignal in Form einer Keule auf einer vorgebbaren Bahn an einem Sender (6) umläuft und
- die umlaufende Sendekeule Winkelinformationen umfaßt, die zur Bestimmung der Richtung des Senders (6) dienen.

2. Verfahren nach Anspruch 1, **dadurch gekennzeichnet, daß** als Zeitsignal die für den überflogenen Ort aktuelle lokale Zeit gesendet wird.

3. Verfahren nach einem der vorhergehenden Ansprüche, **dadurch gekennzeichnet, daß** der Empfänger (8) selbständig seine geographische Position ermittelt und damit eine Zuordnung zu einer bestimmten geographischen, vorzugsweise numerierten, Zone (17) durchführt.

4. Verfahren nach einem der vorhergehenden Ansprüche, **dadurch gekennzeichnet, daß** das Zeitsignal (14) statisch oder dynamisch ausgestrahlt wird.

5. Verfahren nach Anspruch 1, **dadurch gekennzeichnet, daß** die Keule zeitdiskret oder zeitkontinuierlich umläuft.

6. Verfahren nach einem der vorhergehenden Ansprüche, **dadurch gekennzeichnet, daß** der Sender (6) Hilfsträgerfrequenzen verwendet.

7. Verfahren nach einem der vorhergehenden Ansprüche, **dadurch gekennzeichnet, daß** einzelne Antennen mit Phasenansteuerung oder rotierende Antennen zur Aussendung des Zeitsignals (14) verwendet werden.

8. Verfahren nach einem der vorhergehenden Ansprüche, **dadurch gekennzeichnet, daß** die Erdoberfläche in geeignete, numerierte Zonen (17) aufgeteilt wird.

9. Verfahren nach einem der vorhergehenden Ansprüche, **dadurch gekennzeichnet, daß** zusätzlich zum Zeitsignal (14) Zusatzinformationen übertragen werden.

10. Verfahren nach Anspruch 9, **dadurch gekennzeichnet, daß** die Zusatzinformationen, die Ephemeriden des Senders, die Flugrichtung, die Koordinaten und/oder die Zeiten des nächsten Überfluges des Senders (6) umfassen.

11. Verfahren nach einem der vorhergehenden Ansprüche, **dadurch gekennzeichnet, daß** mittels einer Laufzeitdifferenz der mit verschiedenen Frequenzen gesendeten Signale durch die Ionosphäre der Abstand zwischen Sender (6) und Empfänger (8) vom Empfänger ermittelt wird.

12. Verfahren nach Anspruch 11, **dadurch gekennzeichnet, daß** der Sender (6) eine Ionosphärenkorrektur selbständig durchführt oder von einer Kontrollstation (10.2) übermittelt bekommt.

13. Verfahren nach einem der vorhergehenden Ansprüche, **dadurch gekennzeichnet, daß** das Signal des Senders (6) durch eine Frequenz- und/oder Phasenmodulation gespreizt wird.

14. Verfahren nach einem der vorhergehenden Ansprüche, **dadurch gekennzeichnet, daß** eine Modulation und eine Kodierung des Zeitsignals (14) des Senders (6) getrennt erfolgt.

15. Verfahren nach einem der vorhergehenden Ansprüche, **dadurch gekennzeichnet, daß** die Kodierung und Übertragung synchron erfolgt.

16. Verfahren nach einem der vorhergehenden Ansprüche, **dadurch gekennzeichnet, daß** eine synchrone Verschiebung der Sendefrequenzen erfolgt.

17. Verfahren nach Anspruch 16, **dadurch gekennzeichnet, daß** aus der Verschiebungsfrequenz eine Erhöhung der zeitlichen Auflösung erfolgt.

18. Verfahren nach Anspruch 16 oder 17, **dadurch gekennzeichnet, daß** aus der Verschiebungsphasenlage eine zusätzliche zeitliche Auflösung des Zeitsignals (14) gewonnen wird.

19. Verfahren nach einem der vorhergehenden Ansprüche, **dadurch gekennzeichnet, daß** die gesendeten Datenpakete eingefügte Synchronisationssignale enthalten.

20. Verfahren nach einem der vorhergehenden Ansprüche, **dadurch gekennzeichnet, daß** beim Überflug über einen nationalen Zeitsender auf der Erde eine automatische Einstellung einer Uhr an Bord des Flugkörpers (2) erfolgt.

21. Verfahren zum Empfangen eines Zeitsignals, wobei
- der Empfänger aus dem empfangenen Zeitsignal selbständig seine geographische Position auf der Erde ermittelt und daraus die aktuelle lokale Zeit bestimmt, wobei der Empfänger seine geographische Position aus dem mit einer oder mehreren Frequenzen von einem Sender abgestrahlten Zeitsignal die Dopplerverschiebung und/oder aus der Laufzeitdispersion des Zeitsignals den Abstand zum Sender ermittelt, und
- der Empfänger aus dem als umlaufende Keule abgestrahlten Zeitsignal den Abstrahlwinkel ermittelt.

22. Verfahren nach Anspruch 21, **dadurch gekennzeichnet, daß** zur Ermittlung der Position des Empfängers (8) ein Dopplersprung der Empfangsfrequenz ausgewertet wird.

23. Verfahren nach Anspruch 21, **dadurch gekennzeichnet, daß** eine Uhr (9), vorzugsweise Armbanduhr, das Zeitsignal empfängt.

## Claims

1. Method of emitting a time signal, wherein
- to achieve global reception of the time signal it is emitted with one specific or several frequencies from a flying object (2) moving relative to a point on the earth's surface that moves along a trajectory (19) with a large orbital inclination,
- the time signal orbits in the form of a lobe on a pre-definable path to a transmitter (6) and
- the orbiting radiation lobe includes angle data used to determine the direction of the transmitter (6).

2. Method according to claim 1, **characterised in that** the current local time for the location being overflown is emitted as the time signal.

3. Method according to one of the preceding claims, **characterised in that** the receiver (8) independently determines its geographical position and thus performs an assignment to a specific geographical, preferably numbered, zone (17).

4. Method according to one of the preceding claims, **characterised in that** the time signal (14) is transmitted statically or dynamically.

5. Method according to claim 1, **characterised in that** the lobe orbits in discrete time or continuous time.

6. Method according to one of the preceding claims, **characterised in that** the transmitter (6) uses auxiliary carrier frequencies.

7. Method according to one of the preceding claims, **characterised in that** individual antennae with phase drive or rotating antennae are used for emitting the time signal (14).

8. Method according to one of the preceding claims, **characterised in that** the earth's surface is divided into appropriate numbered zones (17).

9. Method according to one of the preceding claims, **characterised in that**, in addition to the time signal (14), additional information is transmitted.

10. Method according to claim 9, **characterised in that** the additional information includes the ephemerides of the transmitter, the flight direction, the co-ordinates and/or the times of the next oversight of the transmitter (6).

11. Method according to one of the preceding claims, **characterised in that** by means of a delay difference of the signals transmitted with different frequencies through the ionosphere, the distance between transmitter (6) and receiver (8) is determined by the receiver.

12. Method according to claim 11, **characterised in that** the transmitter (6) independently performs an ionosphere correction or has it transmitted by a control station (10.2).

13. Method according to one of the preceding claims, **characterised in that** the signal of the transmitter (6) is expanded by a frequency and/or phase modulation.

14. Method according to one of the preceding claims, **characterised in that** modulation and coding of the time signal (14) of the transmitter (6) takes place separately.

15. Method according to one of the preceding claims, **characterised in that** the coding and transmission take place synchronously.

16. Method according to one of the preceding claims, **characterised in that** a synchronous shift of the transmission frequencies takes place.

17. Method according to claim 16, **characterised in that** an increase in the chronological resolution results from the shift frequency.

18. Method according to claim 16 or 17, **characterised in that** an additional chronological resolution of the time signal (14) is obtained from the shift phase position.

19. Method according to one of the preceding claims, **characterised in that** the transmitted data packets contain inserted synchronisation signals.

20. Method according to one of the preceding claims, **characterised in that** during the overflight over a national time transmitter on the earth a clock is automatically set on board the flying object (2).

21. Method of receiving a time signal, wherein
- the receiver independently determines its geographical position on the earth from the time signal received and, from this, determines the current local time, wherein the receiver determines its geographical position from the time signal beamed with one or several frequencies from a transmitter, the Doppler shift and/or the distance to the transmitter from the delay spread of the time signal, and
- the receiver determines the angle of radiation from the time signal radiated as an orbiting lobe.

22. Method according to claim 21, **characterised in that** to determine the position of the receiver (8) a Doppler jump of the received frequency is analysed.

23. Method according to claim 21, **characterised in that** a clock (9), preferably a wristwatch, receives the time signal.

## Revendications

1. Processus pour l'émission d'un signal horaire,
- l'émission se faisant à une certaine fréquence ou à plusieurs fréquences à partir d'un engin (2) se déplaçant par rapport à un point de la surface terrestre le long d'une trajectoire (19) avec orbite à forte inclinaison pour obtenir une réception globale du signal horaire,
- le signal horaire sous la forme d'un lobe faisant le tour d'un émetteur (6) sur une trajectoire pouvant être prescrite et
- le lobe d'émission en orbite comprenant des informations relatives à l'angle permettant de déterminer la direction de l'émetteur (6).

2. Processus suivant la revendication 1, **caractérisé en ce que** l'horaire local actuel pour le lieu survolé est émis comme signal horaire.

3. Processus suivant l'une des revendications précédentes, **caractérisé en ce que** le récepteur (8) calcule automatiquement sa position géographique et ainsi effectue une affectation à une zone (17) géographique déterminée, de préférence numérotée.

4. Processus suivant l'une des revendications précédentes, **caractérisé en ce que** le signal horaire (14) est émis de manière statique ou dynamique.

5. Processus suivant la revendication 1, **caractérisé en ce que** le lobe circule à temps discret ou à temps continu.

6. Processus suivant l'une des revendications précédentes, **caractérisé en ce que** l'émetteur (6) utilise des fréquences de sous-porteuse.

7. Processus suivant l'une des revendications précédentes, **caractérisé en ce que** différentes antennes à commande de phase ou antennes rotatives sont utilisées pour l'émission du signal horaire (14).

8. Processus suivant l'une des revendications précédentes, **caractérisé en ce que** la surface terrestre est partagée en zones (17) appropriées, numérotées.

9. Processus suivant l'une des revendications précédentes, **caractérisé en ce que** des informations supplémentaires sont transmises en outre au signal horaire (14).

10. Processus suivant la revendication 9, **caractérisé en ce que** les informations supplémentaires comprennent les éphémérides de l'émetteur, la direction du vol, les coordonnées et/ou l'horaire du prochain survol de l'émetteur (6).

11. Processus suivant l'une des revendications précédentes, **caractérisé en ce que** la distance entre l'émetteur (6) et le récepteur (8) est calculée au moyen d'une différence de temps de parcours des signaux émis à différentes fréquences dans l'ionosphère par le récepteur.

12. Processus suivant la revendication 11, **caractérisé en ce que** l'émetteur (6) effectue automatiquement une correction ionosphérique ou la reçoit d'une station de contrôle (10.2).

13. Processus suivant l'une des revendications précédentes, **caractérisé en ce que** le signal de l'émetteur (6) est écarté par une modulation de fréquence et/ou de phase.

14. Processus suivant l'une des revendications précédentes, **caractérisé en ce qu'**une modulation et un codage du signal horaire (14) de l'émetteur (6) sont effectués séparément.

15. Processus suivant l'une des revendications précédentes, **caractérisé en ce que** le codage et la transmission se font de manière synchronisée.

16. Processus suivant l'une des revendications précédentes, **caractérisé en ce qu'**un décalage synchrone des fréquences d'émission a lieu.

17. Processus suivant la revendication 16, **caractérisé en ce qu'**une augmentation de la résolution temporelle est réalisée à partir de la fréquence de décalage.

18. Processus suivant les revendications 16 ou 17, **caractérisé en ce qu'**une résolution temporelle supplémentaire du signal horaire (14) est obtenue à partir de la position de la phase de décalage.

19. Processus suivant l'une des revendications précédentes, **caractérisé en ce que** les paquets de données émis contiennent des signaux de synchronisation insérés.

20. Processus suivant l'une des revendications précédentes, **caractérisé en ce que**, lors du survol d'un émetteur d'horaire national sur terre, un réglage automatique d'une horloge à bord de l'engin (2) a lieu.

21. Processus de réception d'un signal horaire,
- le récepteur déterminant automatiquement sa position géographique sur terre à partir du signal horaire reçu et ainsi l'horaire actuel local, le récepteur déterminant sa position géographique à partir d'une ou de plusieurs fréquences d'un signal horaire émis par un émetteur, le décalage Doppler et/ou la distance par rapport à l'émetteur à partir de la dispersion du temps de propagation du signal horaire et
- le récepteur déterminant l'angle de radiation à partir du signal horaire émis sous forme de lobe.

22. Processus suivant la revendication 21, **caractérisé en ce qu'**un saut Doppler de la fréquence de réception est analysé pour déterminer la position du récepteur (8).

23. Processus suivant la revendication 21, **caractérisé en ce qu'**une horloge (9), de préférence une montre, reçoit le signal horaire.
